# EUROPÄISCHE PATENTSCHRIFT

(11) **EP 0 839 171 B1**
(45) Veröffentlichungstag und Bekanntmachung des Hinweises auf die Patenterteilung: **03.05.2000**
(21) Anmeldenummer: 96925702.1
(22) Anmeldetag: 10.07.1996
(51) Int. Cl.: C09K 3/10, C09J 123/02

(54) **BRANDHEMMENDES DICHTUNGSSYSTEM AUF BASIS VON SCHMELZKLEBSTOFFEN UND VERFAHREN ZUR FLAMMFESTEN ABDICHTUNG VON GEGENSTÄNDEN ODER ÖFFNUNGEN**
FIREPROOF SEALING SYSTEM BASED ON MOLTEN ADHESIVES AND PROCESS FOR THE FLAMEPROOF SEALING OF OBJECTS OR APERTURES
SYSTEME D'ETANCHEITE COUPE-FEU A BASE DE COLLES A FUSION ET PROCEDE PERMETTANT DE RENDRE ETANCHES, TOUT EN LES RENDANT RESISTANT AUX FLAMMES, DES OBJETS OU DES OUVERTURES

(30) Priorität: 17.07.1995 AT 120895
(43) Veröffentlichungstag der Anmeldung: 06.05.1998
(73) Patentinhaber: Dr. Kuhn AG, 6300 Zug (CH)
(72) Erfinder: GUBO, Wolfgang, A-4020 Linz (AT)
(74) Vertreter: Merkle, Gebhard
(86) Internationale Anmeldenummer: EP9603016
(87) Internationale Veröffentlichungsnummer: WO9704037

(56) Entgegenhaltungen:
- DD-A- 298 516
- DD-A- 298 517
- DE-A- 4 135 678
- DATABASE WPI Week 9010 Derwent Publications Ltd., London, GB; AN 90-070428 XP002018222 & JP,A,02 022 322 (TOSHIBA CHEM) , 25.Januar 1990

## Beschreibung

Die vorliegende Erfindung betrifft ein brandhemmendes Dichtungssystem auf Basis von Schmelzklebstoffen und ein Verfahren zur flammfesten Abdichtung von Gegenständen oder Öffnungen durch Auftragung eines solchen Dichtungssystems.

Bekannte brandhemmende Dichtungssysteme sind beispielsweise Brandschutzlaminate. Brandschutzlaminate bestehen üblicherweise aus einer Brandschutzmasse, die auf einer Trägerbahn, beispielsweise ein Glasfaser-, Textilfaser- oder Kohlenfaservlies, aufkaschiert ist, und werden beispielsweise zur Herstellung von Türdichtungen, Fensterdichtungen oder anderen Dichtungen verwendet. Weiters werden Brandschutzlaminate auch bei Brandschutzverglasungen zwischen Glas und Rahmen, sowie innerhalb von Brandschutztüren eingesetzt. Um die Befestigung zu ermögliche, sind die Brandschutzlaminate teilweise mit einer Klebeschicht ausgerüstet. Die Anbringung kann auch, bei Fehlen einer Klebeschicht, beispielsweise durch Anschrauben oder mittels Nägeln erfolgen.

Der Nachteil bei den bisher bekannten Brandschutzlaminaten liegt jedoch in der Art der Anbringung, da entweder die zusätzliche Ausrüstung mit einer Klebeschicht oder der zusätzliche Arbeitsaufwand beim Anschrauben oder -nageln erforderlich ist. Ein weiterer Nachteil ist der Verlust an Laminat, der sich durch die genaue Anpassung vorgegebener Laminatgrößen an den jeweils abzudichtenden Gegenstand ergibt.

Aufgabe der vorliegenden Erfindung war es demnach, ein brandhemmendes Dichtungssystem zu finden, das auf leichte Weise und ohne Verluste in den brandhemmend auszurüstenden Gegenstand eingebaut werden kann.

Unerwarteterweise konnte diese Aufgabe durch die Kombination von Brandschutzkomponenten mit Schmelzklebstoffen gelöst werden.

Gegenstand der vorliegenden Erfindung sind demnach brandhemmende Dichtungssysteme auf Basis von Schmelzklebstoffen, die dadurch gekennzeichnet sind, daß sie
a) einen Schmelzklebstoff
b) Bindemittel,
c) im Brandfall Kohlenstoffgerüst bildende Substanzen
d) Flammschutzmittel, sowie
e) eine im Brandfall intumeszierende Komponente enthalten.

Die erfindungsgemäßen Dichtungssysteme sind auf der Basis von Schmelzklebstoffen aufgebaut. Geeignete Schmelzklebstoffe sind beispielsweise solche auf Basis von Synthesekautschuken, bevorzugt auf Basis von sogenannten thermoplastischen Kautschukarten, wie etwa Blockcopolmere aus Styrol und Butadien bzw. Isopren oder Butylkautschuk. Weiter eignen sich Schmelzklebstoffe auf Basis von niedermolekularen Polyethylenen (PE) und Polyethylen-Wachsen, auf Basis hochmolekularer Ethylen-Vinylacetat-Copolymeren, auf Basis von ataktischem Polypropylen, auf Basis von Ethylen-Acrylsäureester-Copolymerisaten, gegebenenfalls mit einem geringen Gehalt an Carboxylgruppen, auf Basis von Polyamiden und Polyaminoamiden, auf Basis von Polyurethanen, sowie solche auf Basis von aliphatischen oder aromatischen Polyestern.

Diese Schmelzkleber können übliche Zusätze enthalten, wie etwa Oxidationsstabilisatoren, Weichmacher, Pigmente zur Einfärbung, wie einer Weißfärbung, Füllstoffe und dergleichen.

Erfindungsgemäß werden dem zur Herstellung des Dichtungssystemes verwendeten Schmelzkleber Bindemittel, beispielsweise polymere Bindemittel oder Fasern zugesetzt. Beispiele für polymere Bindemittel sind etwa Polyvinylacetat, Polyvinylacrylat, Polyvinylchlorid-Mischpolymerisate oder Polychloroprene. Als Fasern kommen bevorzugt Mineralfasern in Frage. Unter Mineralfasern versteht man dabei je nach ihren Ausgangsstoffen Glas-, Stein- oder Schlackenfasern, sowie keramische Fasern. Gebräuchlich sind außerdem die Bezeichnungen Mineral-, Glas-, Stein- und Schlacken- bzw. Hüttenwolle. Bevorzugt werden als Bindemittel Fasern verwendet, es können dabei auch Gemische aus unterschiedlichen Fasern eingesetzt werden.

Weiters werden den Schmelzklebern eine im Brandfall ein Kohlenstoffgerüst bzw. -kruste bildende Substanz zugegeben. Geeignete Substanzen sind beispielsweise duromere Kunststoffe, wie etwa Formaldehydharze, Harnstoffharze, Phenolharze, Phenol-Formaldehydharze, Polyacrylnitril, Polyimide, Malaminharze, Zucker, Melasse, Celloluse oder deren Derivate. Die verwendeten Harze sollten bevorzugt einen Schmelzpunkt zwischen 100 und 200°C aufweisen. Als besonders vorteilhaft erweisen sich dabei Phenol- und Phenol-Formaldehydharze. Bei der Erwärmung im Brandfall vernetzen diese Substanzen zunächst, wobei die starken intermolekularen Bindungen auch bei der weiteren thermischen Belastung, die zur pyrolytischen Zersetzung und schließlich zur Bildung eines parakristallinen Kohlenstoffgerüstes führt, erhalten bleiben (Chemie-Ing.-Tech. 41 Nr. 9/10 (1970), S. 659-669).

Als dritte Komponente wird dem Schmelzklebstoff zu dessen Flammfestausrüstung ein Flammschutzmittel zugemischt. Beispiele für geeignete Flammschutzmittel sind Aluminiumhydroxid, Aluminiumoxid-Trihydrat, Magnesiumhydroxid, Calciumcarbonat, Borverbindungen, Ammoniumsulfamat oder Harnstoff. Weiters können beispielsweise Oxide und Carbonate von Metallen, wie etwa Wismuth-, Zinn, Eisen-, Antimon- oder Molybdänoxide oder Wismuthcarbonat, und andere übliche Flammschutzmittel verwendet werden.

Zusätzlich wird eine im Brandfall intumeszierende Komponente zugesetzt. Als intumeszierende Komponente kommen alle im Brandfall aufschäumenden Komponenten bzw. Substanzen, die in fester Form, beispielsweise als Pulver oder Granulat, vorliegen, in Frage. Dies sind beispielsweise Komponenten auf Basis von Blähgraphit, Silikaten, Polyurethanen, Stickstoff- oder Phosphorverbindungen, wie sie etwa aus EP-B-153 564 oder EP-B-338 347 bekannt sind. Bevorzugt wird Blähgraphit oder eine Komponente auf Basis von Phosphorverbindungen eingesetzt.

Die Mengen der einzelnen Komponenten in den erfindungsgemäßen Dichtungssystemen richten sich nach den Anforderungen an ihre Eigenschaften und an das geforderte Verhalten im Brandfall, wobei sich ein hoher Gehalt an intumeszierender Komponente günstig für das Brandverhalten, ein hoher Gehalt an Bindemitteln günstig für die Flexibilität und ein hoher Gehalt an Substanzen, die im Brandfall ein Kohlenstoffgerüst bilden, günstig für die Festigkeit der Dichtungssysteme im Brandfall auswirken.

Die erfindungsgemäßen Dichtungssysteme enthalten vorzugsweise
a) 30 bis 70 Gew.-%, besonders bevorzugt 40 bis 60 Gew.-%, an Schmelzklebstoff,
b) 1 bis 15 Gew.-%, besonders bevorzugt 3 bis 10 Gew.-%, Bindemittel,
c) 1 bis 15 Gew.-%, besonders bevorzugt 3 bis 10 Gew.-%, im Brandfall ein Kohlenstoffgerüst bildende Substanzen,
d) 1 bis 25 Gew.-%, besonders bevorzugt 1 bis 15 Gew-%, an Flammschutzmittel und
e) 10 bis 40 Gew.-%, besonders bevorzugt 15 bis 30 Gew.-%, intumeszierende Komponenten.

Die Herstellung der erfindungsgemäßen Dichtungssysteme erfolgt durch einfaches Zusammenmischen und Zusammenschmelzen der einzelnen Komponenten, beispielsweise in einem beheizbaren Rührkessel. Anschließend wird die so erhaltene Schmelze in einer Pastillier- oder Granuliervorrichtung konfektioniert. Dabei werden die Schmelzen beispielsweise auf ein Kühlband aufgetropft oder als Film auf einem Kühlband zum Erstarren gebracht und anschließend geschnitten. Bevorzugt werden heizbare Kneter oder Extruder, denen entsprechende Konfektioniereinrichtungen nachgeschaltet sind, verwendet.

Die flammfeste Abdichtung der zu schützenden Gegenstände oder Öffnungen erfolgt dann bevorzugt mittels zur Auftragung von Schmelzklebstoffen üblichen Geräten, beispielsweise einem sogenanntem Düsenauftragsgerät oder einer Schmelzklebstoff-Handpistole. Dabei wird das granulatförmige oder pastillenförmige Dichtungssystem vorzugsweise in einem drucklosen Vorschmelzbehälter bei einer Temperatur zwischen 100 und 200°C verflüssigt und dann durch die Auftragsdüsen aufgetragen. Der Auftrag kann dabei durch die Art und Bohrung der Düse, den Druck des Brandschutzlaminates und die Steuerung der Düsenöffnung sehr genau und variabel eingestellt werden. Nach dem Erkalten und Erstarren haftet das Dichtungssystem duch den enthaltenen Schmelzklebstoff an dem zu schützenden Gegenstand fest an.

Durch das erfindungsgemäße brandhemmende Dichtungssystem wird die flammhemmende Ausrüstung von beispielsweise Brandschutzverglasungen, Brandschutztüren, aber auch von anderen abzudichtenden Öffnungen, wie etwa Fugen oder Kabeldurchführungen, deutlich erleichtert, und zudem fallen keine Verluste wie beim Anpassen herkömmlicher Dichtungssysteme in Laminatform an.

### Beispiel

Zur Herstellung eines brandhemmenden Dichtungssystems werden 50 Gew.-% eines handelsüblichen Schmelzklebers auf Basis von Vinylacetat (Fa. Fuller). 10 Gew.-% an Phenolharz (Resin 122, Fa. Ceca), 5 Gew.-% Inorphil (Mineralfasern), 15 Gew.-% Aluminiumhydroxid, sowie 20 Gew.-% an Blähgraphit in einem beheizten Rührkessel zusammengeschmolzen. Anschließend wird die Schmelze als Film auf einem Kühlband zum Erstarren gebracht und danach geschnitten, worauf das Dichtungssystem in Granulatform erhalten wird.

## Patentansprüche

1. Brandhemmendes Dichtungssystem auf Basis von Schmelzklebstoffen, **dadurch gekennzeichnet,** daß es
a) einen Schmelzklebstoff auf Basis von Synthesekautschuken, auf Basis von niedermolekularen Polyethylenen (PE) und Polyethylen-Wachsen, auf Basis hochmolekularer Ethylen-Vinylacetat-Copolymeren, auf Basis von ataktischem Polypropylen, auf Basis von Ethylen-Acrylsäureester-Copolymerisaten, gegebenenfalls mit einem geringen Gehalt an Carboxylgruppen, auf Basis von Polyamiden und Polyaminoamiden, auf Basis von Polyurethanen, oder auf Basis von aliphatischen oder aromatischen Polyestern,
b) Bindemittel,
c) im Brandfall Kohlenstoffgerüst bildende Substanzen,
d) Flammschutzmittel, sowie
e) eine im Brandfall intumeszierende Komponente enthält.

2. Brandhemmendes Dichtungssystem nach Anspruch 1, **dadurch gekennzeichnet,** daß es
a) 30 bis 70 Gew.-%, besonders bevorzugt 40 bis 60 Gew.-%, an Schmelzklebstoff,
b) 1 bis 15 Gew.-%, besonders bevorzugt 3 bis 10 Gew.-%, Bindemittel,
c) 1 bis 15 Gew.-%, besonders bevorzugt 3 bis 10 Gew.-%, im Brandfall ein Kohlenstoffgerüst bildende Substanzen,
d) 1 bis 25 Gew-%, besonders bevorzugt 1 bis 15 Gew.-%, an Flammschutzmittel und
e) 10 bis 40 Gew-%, besonders bevorzugt 15 bis 30 Gew.-%, einer intumeszierenden Komponente enthält.

3. Brandhemmendes Dichtungssystem nach Anspruch 1 oder 2, **dadurch gekennzeichnet**, daß es als Bindemittel ein polymeres Bindemittel oder Fasern enthält.

4. Brandhemmendes Dichtungssystem nach Anspruch 3, **dadurch gekennzeichnet**, daß es als Bindemittel Mineralfasern enthält.

5. Brandhemmendes Dichtungssystem nach mindestens einem der Ansprüche 1-4, **dadurch gekennzeichnet,** daß es als im Brandfall ein Kohlenstoffgerüst bildende Substanz duromere Kunststoffe enthält.

6. Brandhemmendes Dichtungssystem nach Anspruch 5, **dadurch gekennzeichnet**, daß es als duromeren Kunststoff Formaldehydharze, Harnstoffharze, Phenolharze, Phenol-Formaldehydharze, Melaminharze oder Polyimide enthält.

7. Brandhemmendes Dichtungssystem nach mindestens einem der Ansprüche 1-6, **dadurch gekennzeichnet**, daß es als Flammschutzmittel Aluminiumhydroxid, Aluminiumoxid-Trihydrat, Magnesiumhydroxid, Calciumcarbonat, Borverbindungen, Ammoniumsulfamat, Harnstoff oder Oxide oder Carbonate von Metallen enthält.

8. Brandhemmendes Dichtungssystem nach mindestens einem der Ansprüche 1-7, **dadurch gekennzeichnet,** daß es als im Brandfall intumeszierende Komponente eine solche auf Basis von Blähgraphit, Silikaten, Polyurethanen, Stickstoff- oder Phosphorverbindungen enthält, besonders bevorzugt Blähgraphit oder eine Komponente auf Basis von Phosphorverbindungen.

9. Verfahren zur flammfesten Abdichtung von Gegenständen oder Öffnungen durch Auftragung der Dichtungssysteme nach mindestens einem der Ansprüche 1 bis 8 mittels üblichen Auftragsgeräten für Schmelzklebstoffe.

10. Verfahren nach Anspruch 9, wobei die Auftragung duch Sprühen oder in Raupenform erfolgt.

## Claims

1. Fire-retardant sealing system based on hotmelt adhesives, characterized in that it contains
a) a hotmelt adhesive based on synthetic rubbers, based on low molecular weight polyethylenes (PE) and polyethylene waxes, based on high molecular weight ethylene/vinyl acetate copolymers, based on atactic polypropylene, based on ethylene/acrylate copolymers, with or without a low content of carboxyl groups, based on polyamides and polyaminoamides, based on polyurethanes or based on aliphatic or aromatic polyesters,
b) binders,
c) substances forming a carbon skeleton in the event of a fire,
d) flameproofing agents and
e) a component which is intumescent in the event of a fire.

2. Fire-retardant sealing system according to Claim 1, characterized in that it contains
a) 30 to 70% by weight, particularly preferably 40 to 60% by weight, of hotmelt adhesive,
b) 1 to 15% by weight, particularly preferably 3 to 10% by weight, of binder,
c) 1 to 15% by weight, particularly preferably 3 to 10% by weight, of substances forming a carbon skeleton in the event of a fire,
d) 1 to 25% by weight, particularly preferably 1 to 15% by weight, of flameproofing agents and e) 10 to 40% by weight, particularly preferably 15 to 30% by weight, of an intumescent component.

3. Fire-retardant sealing system according to Claim 1 or 2, characterized in that it contains a polymeric binder or fibres as the binder.

4. Fire-retardant sealing system according to Claim 3, characterized in that it contains mineral fibres as the binder.

5. Fire-retardant sealing system according to at least one of Claims 1-4, characterized in that it contains thermosetting plastics as the substance forming the carbon skeleton in the event of a fire.

6. Fire-retardant sealing system according to Claim 5, characterized in that it contains formaldehyde resins, urea resins, phenol resins, phenol/formaldehyde resins, melamine resins or polyimides as the thermosetting plastic.

7. Fire-retardant sealing system according to at least one of Claims 1-6, characterized in that it contains aluminium hydroxide, aluminium oxide trihydrate, magnesium hydroxide, calcium carbonate, boron compounds, ammonium sulphamate, urea or oxides or carbonates of metals as the flameproofing agent.

8. Fire-retardant sealing system according to at least one of Claims 1-7, characterized in that it contains, as the component which is intumescent in the event of a fire, one based on expanded graphite, silicates, polyurethanes, nitrogen compounds or phosphorus compounds, particularly preferably expanded graphite or a component based on phosphorus compounds.

9. Process for the flameproof sealing of articles or apertures by applying the sealing systems according to at least one of Claims 1 to 8 by means of conventional applicators for hotmelt adhesives.

10. Process according to Claim 9, the application being effected by spraying or in bead form.

## Revendications

1. Système d'étanchéité coupe-feu à base de colle à fusion, caractérisé en ce qu'il contient :
a) une colle à fusion à base de caoutchouc synthétique, à base de cires polyéthylène et polyéthylènes (PE) à faible poids moléculaire, à base de copolymères éthylène-vinylacétate à haut poids moléculaire, à base de polypropylènes atactiques, à base de copolymérisats éthylène-ester d'acide acrylique, le cas échéant avec une faible teneur en groupes carboxyle, à base de polyamides et polyaminoamides, à base de polyuréthanes ou à base de polyesters aliphatiques ou aromatiques,
b) des liants,
c) des substances constituant un squelette carboné en cas de feu,
d) des moyens pare-flamme, et
e) un composant intumescent en cas de feu.

2. Système d'étanchéité coupe-feu selon la revendication 1, caractérisé en ce qu'il contient:
a) 30 à 70% en poids, de manière particulièrement préférée 40 à 60% en poids de colle à fusion,
b) 1 à 15% en poids, de manière particulièrement préférée 3 à 10% en poids de liant,
c) 1 à 15% en poids, de préférence 3 à 10% en poids de substance constituant un squelette carboné en cas de feu,
d) 1 à 25% en poids, de manière particulièrement préférée 1 à 15% en poids de moyen pare-flamme, et
e) 10 à 40% en poids, de manière particulièrement préférée 15 à 30% en poids d'un composant intumescent.

3. Système d'étanchéité coupe-feu selon la revendication 1 ou 2, caractérisé en ce que comme liant il contient un liant polymère ou des fibres.

4. Système d'étanchéité coupe-feu selon la revendication 3, caractérisé en ce que comme liant il contient des fibres minérales.

5. Système d'étanchéité coupe-feu selon l'une au moins des revendications 1 à 4, caractérisé en ce que comme substance constituant un squelette carboné en cas de feu il contient des matières synthétiques duromères.

6. Système d'étanchéité coupe-feu selon la revendication 5, caractérisé en ce que comme matière synthétique duromère, il contient des résines formaldéhyde, des résines carbamide, des résines phénol, des résines phénol-formaldéhyde, des résines mélamine ou des polyimides.

7. Système d'étanchéité coupe-feu selon l'une au moins des revendications 1 à 6, caractérisé en ce que comme moyen pare-flamme il contient de l'hydroxyde d'aluminium, du trihydrate d'oxyde d'aluminium, de l'hydroxyde de magnésium, du carbonate de calcium, des liaisons bore, du sulfamate d'ammonium, de l'urée ou des oxydes ou carbonates de métaux.

8. Système d'étanchéité coupe-feu selon l'une au moins des revendications 1 à 7, caractérisé en ce que comme composant intumescent en cas de feu il contient un tel composant à base de graphite gonflant, de silicates, de polyuréthanes, de liaisons azote ou phosphore, de manière particulièrement préférée du graphite gonflant ou un composant à base de liaisons phosphore.

9. Procédé pour rendre étanche, tout en les rendant résistants aux flammes, des objets ou des ouvertures en y appliquant les systèmes d'étanchéité selon l'une au moins des revendications 1 à 8 au moyen d'appareils d'application usuels pour les colles à fusion.

10. Procédé selon la revendication 9, dans lequel l'application est effectuée par pulvérisation ou sous forme de cordon.
